# EUROPÄISCHE PATENTSCHRIFT

(11) **EP 2 813 389 B1**
(45) Veröffentlichungstag und Bekanntmachung des Hinweises auf die Patenterteilung: **28.11.2018**
(21) Anmeldenummer: 14002035.5
(22) Anmeldetag: 13.06.2014
(51) Int. Cl.: B60N 2/75

(54) **Armlehne für einen Fahrzeugsitz**
Armrest for a car seat
Accoudoir pour un siège de véhicule

(30) Priorität: 14.06.2013 DE 102013009956
(43) Veröffentlichungstag der Anmeldung: 17.12.2014
(73) Patentinhaber: GRAMMER AG, 92224 Amberg (DE)
(72) Erfinder: Girbinger, Jörg, 92224 Amberg (DE); Himmelhuber, Erwin, 92237 Sulzbach-Rosenberg (DE); Delling, Gerhard, 92546 Schmidgaden (DE)
(74) Vertreter: Roche, von Westernhagen & Ehresmann

(56) Entgegenhaltungen:
- EP-A1- 2 587 089
- DE-A1- 19 830 027
- JP-A- H09 248 256

## Beschreibung

Die Erfindung betrifft eine schwenkbare Armlehne für Fahrzeugsitze (siehe z.B. die DE 198 30 027 A1, dem Oberbegriff entsprechend).

Aus der DE 103 02 291 A1 ist eine Armlehne bekannt, welche zwei, die Armlehne mit einem Grundkörper verbindende Schwenkarme aufweist. Zur Unterstützung der Höhenverstellung und zur elastischen Dämpfung einer Höhenbewegung der arretierten Armauflage umfasst die Armlehne ein Gasdruckfederelement.

In der o.g. DE 198 30 027 A1 ist eine Armlehne beschrieben, bei welcher mittels einer Visco-Kupplung oder eines Kolben-Zylinder-Systems eine bestimmte Dämpfungscharakteristik erreicht wird.

Bei der schwenkbaren Armlehne gemäß der DE 10 2009 013 461 A1 ist zumindest ein Abschnitt der Lagerachse in der Art einer elastisch tordierbaren Drehstabfeder ausgebildet. Die Armlehne kann durch Torsion der Drehstabfeder aus der freitragenden Stützposition nach unten geschwenkt werden, bis die Unterseite der Armlehne an einer Anlagefläche am Sitz oder an der Sitzbank abgestützt wird.

Die EP 1 577 152 B1 beschreibt einen Klappsitz, wobei die Sitzfläche und die Armlehne schwenkbar sind. Die Schwenkbewegung ist mittels eines Dämpfungselements gedämpft.

Die EP 1 690 474 B1 beschreibt einen Klappsitz mit schwenkbarer Sitzfläche und schwenkbarer Armlehne. Ein Aufwärtsschwenken der Armlehne wird von einer Feder unterstützt.

Es war Aufgabe der Erfindung eine schwenkbare Armlehne für einen Fahrzeugsitz zu schaffen, welche beim Schwenken zwischen der Gebrauchs- und der Nichtgebrauchsposition keine Fallbewegung durchführt, die z.B. mit Geräuschen verbunden sind. Insgesamt soll der Bewegungsablauf zwischen der Gebrauchs- und der Nichtgebrauchsposition kontrolliert erfolgen.

Die Aufgabe wurde gelöst durch eine Armlehne mit den Merkmalen des Anspruchs 1.

Die Armlehne umfasst einen Armlehnenkörper, welcher mit einem Grundteil ein Schwenkgelenk bildet. Der Armlehnenkörper ist auf diese Weise zwischen einer Nichtgebrauchsposition und einer Gebrauchsposition über einen Schwenkwinkel α hinweg schwenkbar. Die Armlehne umfasst eine Dämpfungsvorrichtung mit wenigstens einem Dämpfer zur Dämpfung der Bewegung des Armlehnenkörpers. Die Dämpfungsvorrichtung dämpft die Schwenkbewegung des Armlehnenkörpers z.B. lediglich in einem ersten Teilbereich des Schwenkwinkels. Die Dämpfungsvorrichtung wird von einer Steuervorrichtung in Abhängigkeit der Position des Armlehnenkörpers gesteuert.

Die Erfindung ist dadurch gekennzeichnet, dass die Steuervorrichtung einen Steuernocken mit einer Steuerfläche umfasst, wobei die Steuerfläche mit der Dämpfungsvorrichtung in Kontakt steht und sich relativ zu der Dämpfungsvorrichtung bewegt. Während der Bewegung zwischen der Nichtgebrauchs- und der Gebrauchsposition steuert der Nocken die Dämpfungsvorrichtung. Die Relativbewegung zwischen der Steuerfläche und der Dämpfungsvorrichtung wird z.B. von der Bewegung des Armlehnenkörpers gesteuert. Die Steuerfläche ist z.B. mit mehr oder weniger erhabenen Bereichen versehen. Je nachdem mit welchem Bereich die Steuerkurve in Kontakt steht, ist die Bewegung des Armlehnenkörpers gedämpft oder ungedämpft.

Z.B. erfolgt bei der Bewegung des Armlehnenkörpers von der Nichtgebrauchs- in die Gebrauchsposition die Dämpfung des Dämpfungselements in einem ersten Winkelbereich β vor der Gebrauchsposition, insbesondere in einem Winkelbereich von 30 bis 40° vor der Gebrauchsposition..

Alternativ oder zusätzlich erfolgt bei der Bewegung des Armlehnenkörpers von der Gebrauchs- in die Nichtgebrauchsposition die Dämpfung des Dämpfungselements in einem zweiten Winkelbereich γ vor der Nichtgebrauchsposition erfolgt, insbesondere in einem Winkelbereich von etwa 30° bis 40 Grad vor der Nichtgebrauchsposition.

Z.B. wird bei der Bewegung des Armlehnenkörpers von der Nichtgebrauchs- in die Gebrauchsposition eine Rückstellvorrichtung gespannt, welche sich bei der Bewegung von der Gebrauchs- in die Nichtgebrauchsposition entspannt. Die Rückstellkraft ist geringer als die Gewichtskraft des Armlehnenkörpers. Die Rückstellkraft kann z.B. halb so groß sein, wie die Gewichtskraft.

Die Dämpfungsvorrichtung ist z.B. dem Armlehnenkörper oder dem Basisteil und der Steuernocken dem jeweils anderen Teil von Basisteil oder Armlehnenkörper zugeordnet.

Die Dämpfungsvorrichtung umfasst z.B. einen Zylinder und eine Kolbenstange, wobei die Kolbenstange zwischen einer primären Position und einer sekundären Position in eine erste Bewegungssrichtung und in eine zweite Bewegungsrichtung bewegbar ist.

Die Bewegung der Armlehne wird z.B. bei der Bewegung der Kolbenstange in die erste Bewegungsrichtung gedämpft und bei der Bewegung in die zweite Bewegungsrichtung nicht gedämpft.

Die Steuerfläche steht z.B. mit einer Rolle in Kontakt, welche mit der Kolbenstange verbunden ist. Auf diese Weise kann vermieden werden, dass Querkräfte auf die Kolbenstange einwirken, die nicht in die erste oder zweite Bewegungsrichtung gerichtet sind.

Weil über einen Großteil des Schwenkbereichs lediglich ein Teil der Gewichtskraft für ein Drehmoment der Armlehne wirksam ist und ein anderer Teil von dem Schwenkgelenk aufgenommen wird, heben sich das von der Rückstellkraft verursachte Drehmoment (MR) und das von der Gewichtskraft verursachte Drehmoment (MG) an einem Punkt des Schwenkbereichs auf. Erst, wenn der Armlehnenkörper bei der Bewegung von der Nichtgebrauchs- in die Gebrauchsposition über diesen Punkt hinweg bewegt wird, ist MG größer als MR und die Armlehne bewegt sich ohne eine Betätigung durch den Benutzer in die Gebrauchsposition.

Bei der Bewegung des Armlehnenkörpers von der Gebrauchsposition in die Nichtgebrauchsposition muss die Armlehne von dem Benutzer über den Punkt hinwegbewegt werden, an welchem MG und MR gleich groß sind. Danach wird die Armlehne von der Rückstellkraft in die Nichtgebrauchsposition geschwenkt.

Weitere Aspekte der Erfindung ergeben sich anhand von in den Fig. schematisch dargestellten Ausführungsbeispielen. Es zeigen:
Fig. 1 eine perspektivische Ansicht einer ersten Ausführungsform der Armlehne in einer Gebrauchsposition,
Fig. 2 eine perspektivische Ansicht der Armlehne in einer Nichtgebrauchsposition,
Fig. 3 eine Längsschnittdarstellung der Armlehne,
Fig. 4 eine rückwärtige Ansicht der Armlehne gemäß Ansichtspfeil IV in Fig. 3,
Fig. 5 eine Ausschnittdarstellung gemäß Ausschnittlinie V in Fig. 4,
Fig. 6 eine Ausschnittdarstellung gemäß Ausschnittlinie VI in Fig. 3
Fig. 7 eine Schnittdarstellung gemäß Schnittlinie VII in Fig. 4,
Fig. 8 eine Ausschnittdarstellung gemäß Ausschnittlinie VIII in Fig. 7,
Fig. 9, Fig. 10, Fig. 11 und Fig. 12 in Anlehnung an Fig. 8 der Armlehnenkörper in unterschiedlichen Schwenkpositionen,
Fig. 13 eine perspektivische Ansicht einer zweiten Ausführungsform der Armlehne in einer Nichtgebrauchsposition,
Fig. 14 eine rückwärtige Ansicht der Armlehne gemäß Fig. 13,
Fig. 15 eine Ausschnittdarstellung gemäß Ausschnittlinie XV in Fig. 14,
Fig. 16 eine perspektivische Darstellung der Achse, der Dämpfungsvorrichtung sowie der Steuervorrichtung,
Fig. 17a eine Seitenansicht eines Ausschnitts des Armlehnenkörpers in der Nichtgebrauchsposition,
17b in Anlehnung an Fig. 15 eine Ausschnittdarstellung der Steuervorrichtung und der Dämpfungsvorrichtung in der entsprechenden Position des Armlehnenkörpers gemäß Fig. 17a,
Fig. 18a und 18b, Fig. 19a und 19b, Fig. 20a und 20b, Fig. 21a und 21b jeweils die Position des Armlehnenkörpers und die entsprechende Position der Steuervorrichtung und der Dämpfungsvorrichtung,
Fig. 22 eine Darstellung eines Diagramms, welches die Bewegung des Armlehnenkörpers zwischen der Nichtgebrauchsposition und der Gebrauchsposition sowie die Winkelbereiche in denen eine Dämpfung erfolgt zeigt.

Eine Armlehne für Fahrzeugesitze insgesamt wird in den Figuren mit dem Bezugszeichen 10 bezeichnet. Gleiche Bezugszeichen in den unterschiedlichen Figuren bezeichnen gleiche Teile, auch wenn kleine Buchstaben hinzugefügt oder weggelassen sind.

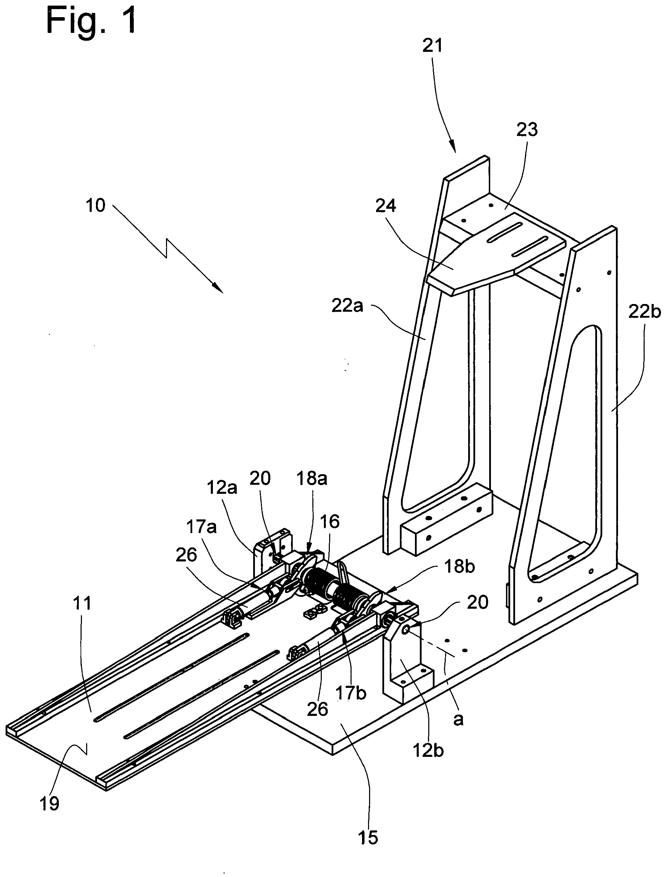

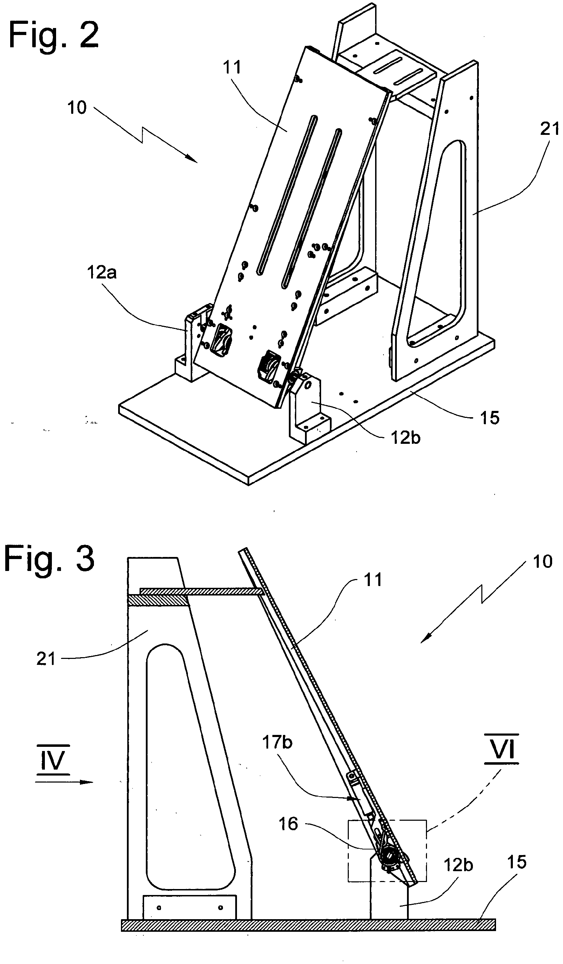

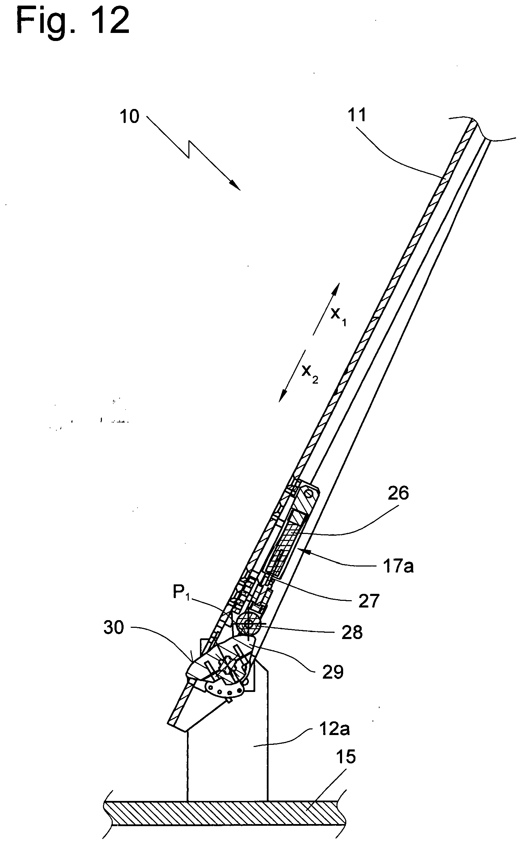

In den Fig. 1 bis 12 ist ein erstes Ausführungsbeispiel der Armlehne 10 dargestellt. Die Armlehne 10 umfasst gemäß Fig. 1 einen Armlehnenkörper 11, welcher mittels Basiselementen 12a und 12b um eine physische Achse 13 und um eine geometrische Achse a schwenkbar an einer fahrzeugfesten Basis 15 gelagert ist. Der Armlehnenkörper 11 ist zwischen einer in Fig. 1 dargestellten Gebrauchsposition und einer in Fig. 2 dargestellten Nichtgebrauchsposition über einen Schwenkwinkel α hinweg schwenkbar. In der Gebrauchsposition kann der Benutzer den Arm auf einer Armauflageseite 19 des Armlehnenkörpers 11 abstützen. Der Armlehnenkörper 11 umfasst ein Polster, das in den Zeichnungen nicht dargestellt ist.

Ferner umfasst die Armlehne 10 einen Rahmen 21 mit Seitenwänden 22a und 22b, welche durch eine Traverse 23 verbunden sind. Der Rahmen 21 bildet zugleich einen Anschlag 24 für den Armlehnenkörper 11.

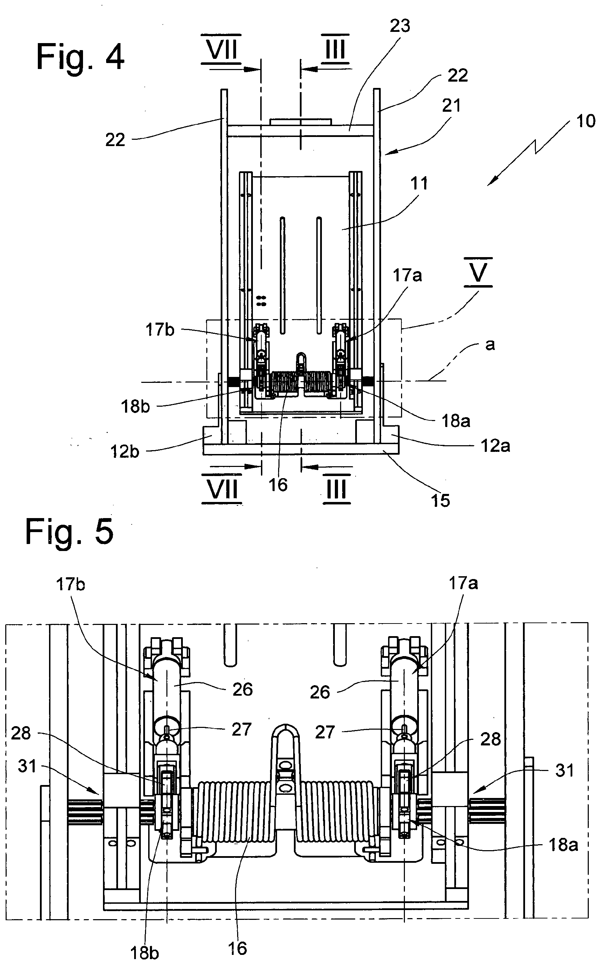

Die Achse 13 (siehe z.B. Fig. 5) ist in Lageraufnahmen 20 der Lagerelemente 12a und 12b gelagert. Die Lageraufnahmen 20 sind mit einer Innenverzahnung versehen. Die Schwenkachse 13 umfasst eine Außenverzahnung, die in die Innenverzahnung der Lageraufnahmen 20 eingreift. Auf diese Weise kann sich die Schwenkachse 13 nicht relativ zu den Lageraufnahmen 20 drehen. Die Achse 13 weist Lagersitze 31 auf, die nicht mit einer Außenverzahnung versehen sind. Auf den Lagersitzen 31 ist der Armlehnenkörper 11 gelagert. Der Armlehnenkörper 11 kann auf diese Weise relativ zu der Achse 13 geschwenkt werden.

Eine Feder 16 belastet den Armlehnenkörper 11 in die Nichtgebrauchsposition. Ferner sind eine erste Dämpfervorrichtung 17a und eine zweite Dämpfervorrichtung 17b vorgesehen, welche die Bewegung des Armlehnenkörpers 11 dämpfen sowie eine erste Steuervorrichtung 18a zur Steuerung der Dämpfervorrichtung 17a und eine zweite Steuervorrichtung 18b zur Steuerung der Dämpfervorrichtung 17b.

Die Dämpfervorrichtungen 17a und 17b umfassen jeweils einen Zylinder 26 mit einer Kolbenstange 27 (siehe z.B. Fig. 5). An der Kolbenstange 27 ist endseitig eine Rolle 28 drehbar befestigt. Die Kolbenstange 27 ist zwischen einer primären Position, in welcher sie maximal aus dem Zylinder herausragt und einer sekundären Position, in welcher sie maximal in den Zylinder hinein bewegt ist in die Bewegungsrichtungen x1 (Kolbenstange bewegt sich in den Zylinder hinein) und x2 (Kolbenstange bewegt sich aus dem Zylinder heraus) verlagerbar.

Die Dämpfung erfolgt, wenn die Kolbenstange 27 aus der primären Position in den Zylinder hinein in die sekundäre Position bewegt wird. Bei Entlastung der Kolbenstange 27 wird die Kolbenstange von einer nicht dargestellten Rückstellvorrichtung automatisch aus dem Kolben heraus in die primäre Position bewegt. Bei der Rückstellbewegung in die primäre Position erfolgt keine Dämpfung.

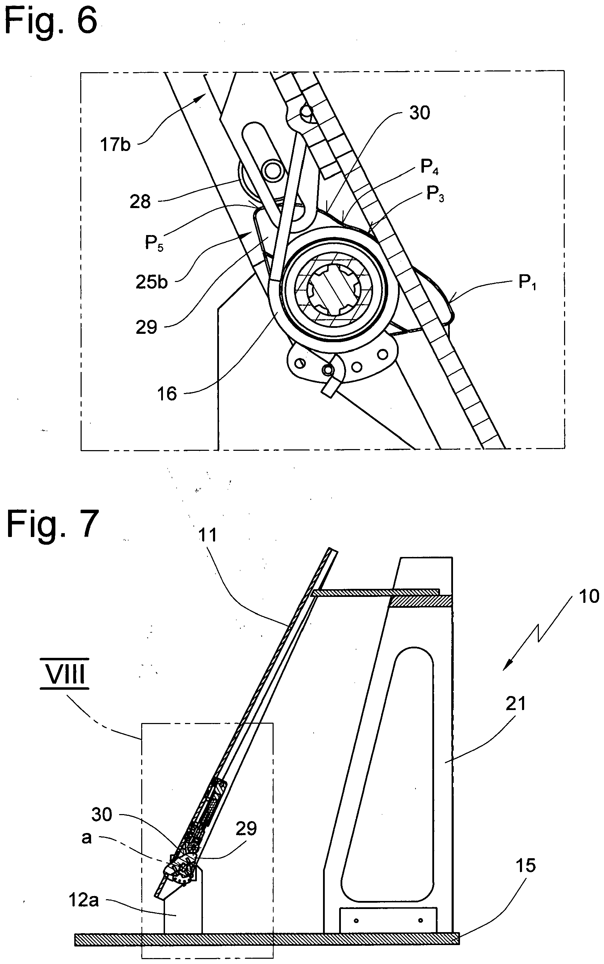

Die Steuervorrichtungen 25a und 25b umfassen jeweils einen Nocken 29 (siehe z.B. Fig. 6) mit einer Steuerfläche 30. Der Nocken 29 ist auf der Achse 13 gelagert und mit einer Innenverzahnung versehen, welche in die Außenverzahnung der Achse 13 eingreift. Der Nocken 29 kann sich somit nicht relativ zu der Achse 13 drehen. Die Steuerfläche 30 weist Bereiche auf, die einen unterschiedlichen Abstand von der Schwenkachse a aufweisen. P2 weist z.B. einen geringeren Abstand von der Schwenkachse a als der Punkt P3 und der Punkt P4α. Der Punkt P3 weist wiederum einen geringeren Abstand von der Schwenkachse a auf, als der Punkt P5.

Da die Zylinder 26 in einem konstanten Abstand zur Schwenkachse a an dem Armlehnenkörper 11 befestigt sind, wird die Kolbenstange 27 umso weiter in Richtung der sekundären Position bewegt, je größer der Abstand des Bereichs der Steuerfläche 30 ist, der mit der Rolle 28 in Kontakt steht. Steht die Rolle 28 z.B. mit dem Punkt P3 in Kontakt, so befindet sich die Kolbenstange 27 in der primären Position. Steht die Rolle 28 z.B. mit dem Punkt P5 in Kontakt, so befindet sich die Kolbenstange 27 in der sekundären Position.

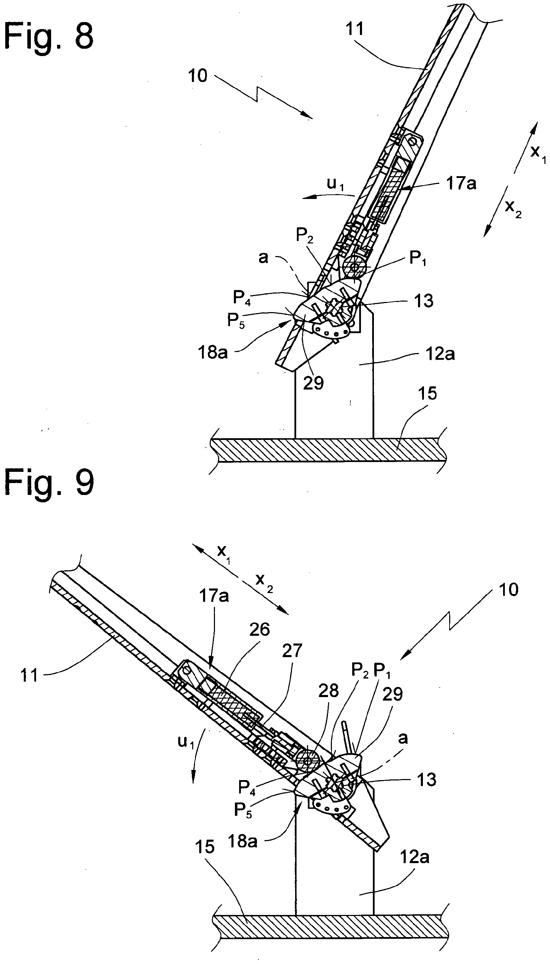

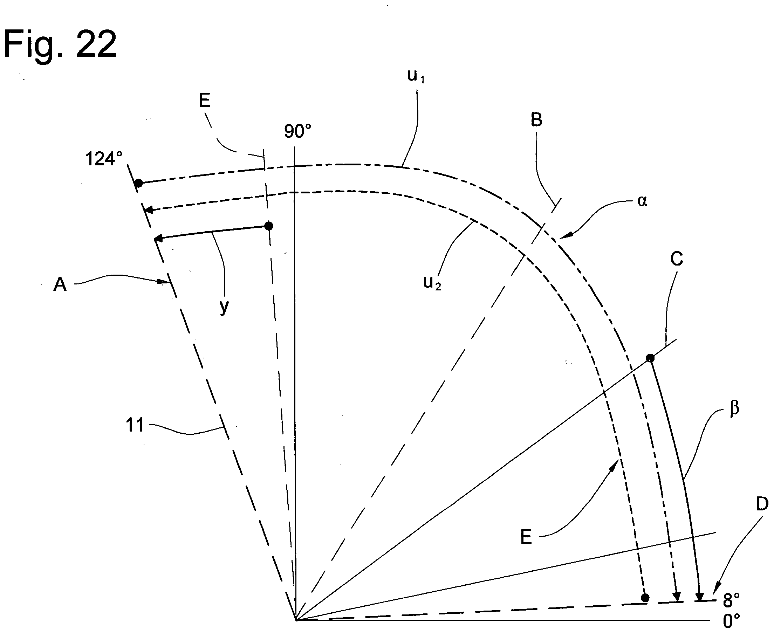

Der Ablauf einer Bewegung des Armlehnenkörpers 11 von der Nichtgebrauchsposition in die Gebrauchsposition und zurück in die Nichtgebrauchsposition ist in den Fig. 8 bis 12 sowie anhand eines Diagramms in Fig. 22 dargestellt. In Fig. 22 ist der Armlehnenkörper 11 lediglich durch eine gestrichelte Linie angedeutet. In der Nichtgebrauchsposition ist der Armlehnenkörper 11 bezüglich der horizontalen Position um z.B. 124 Grad geschwenkt.

Wenn der Armlehnenkörper 11 von der Nichtgebrauchsposition (siehe die Fig. 7 und 8 und das Bezugzeichen A in Fig. 22) in Richtung u1 geschwenkt wird, muss der Armlehnenkörper 11 zunächst entgegen dem Federmoment MF der Feder 16 bewegt werden. Wenn der Armlehnenkörper 11 über die Position (siehe Bezugszeichen B in Fig. 22) hinwegbewegt wird, in welcher das aus der Gewichtskraft des Armlehnenkörpers 11 resultierende Drehmoment MG das entgegengesetzt wirkende Federmoment MF aufhebt, schwenkt der Armlehnenkörper 11 ohne Betätigung durch den Benutzer weiter in Richtung u1, da MG nun größer ist als MF.

Wenn die Position erreicht ist (siehe Fig. 9, in Fig. 22 das Bezugszeichen C sowie Fig. 6 das Bezugszeichen P2), an welcher die Rolle 28 mit dem Punkt P2 der Steuerfläche 30 in Kontakt gerät, setzt die Dämpfung der Bewegung des Armlehnenkörpers 11 ein. Denn zwischen P2 und P5 hat die Steuerfläche 30 einen zunehmenden Abstand von der Schwenkachse a. Das ist z.B. in dem Winkelbereich β, etwa 30 bis 40 Grad vor Erreichen der Gebrauchsposition, der Fall. Das Einsetzen der Dämpfung ist aber durch eine Veränderung der Steuerkurve flexibel gestaltbar.

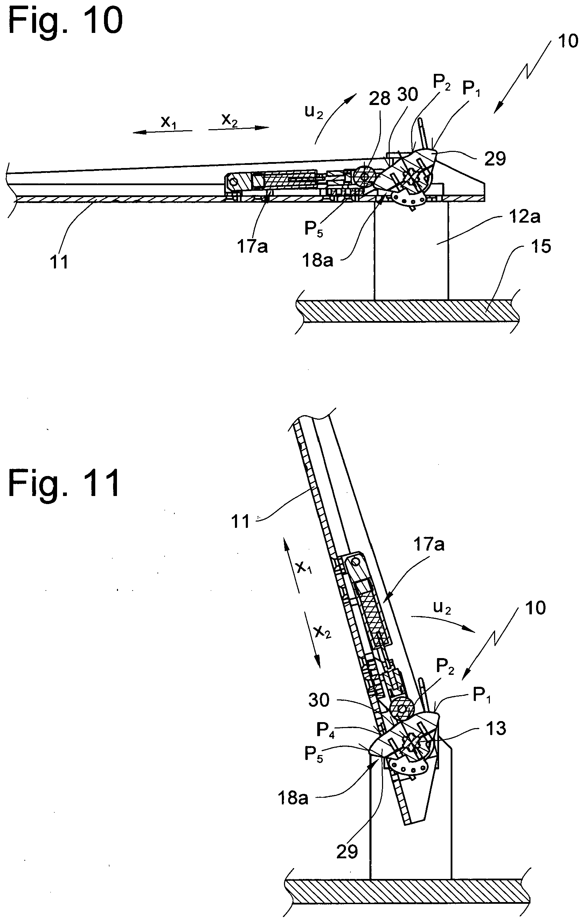

Der Armlehnenkörper 11 bewegt sich dann gedämpft in Richtung u1 in die Gebrauchsposition, die in Fig. 22 mit dem Bezugszeichen D bezeichnet ist. In der Gebrauchsposition (siehe Fig. 10) ist der Armelehnenkörper 11 bezüglich der horizontalen Position um z.B. 8 Grad geschwenkt.

Von der Gebrauchsposition wird der Armlehnenkörper 11 in Richtung u2 in die Nichtgebrauchsposition geschwenkt. Der Benutzer muss dabei nicht das Gesamte Moment MG aufbringen, weil die Bewegung in Richtung u2 von dem Moment MF, welches in Richtung u2 wirkt, unterstützt wird. Weil die Steuerkurve nun in umgekehrter Richtung von der Rolle 28 abgefahren wird, bewegt sich die Kolbenstange 27, von der Rückstellvorrichtung veranlasst, aus dem Zylinder 28 heraus. Dabei wird die Bewegung des Armlehnenkörpers 11 nicht gedämpft.

Wenn der Armlehnenkörper 11 über die Position in Richtung u2 hinweg bewegt wird, in welcher MF und MG sich aufheben (siehe Bezugszeichen B in Fig. 22), bewegt sich der Armlehnenkörper 11 ohne Betätigung durch den Benutzer in Richtung u2 weiter. Hat der Armlehnenkörper 11 eine Winkelstellung von ca. 85 bis 95 Grad erreicht (siehe Bezugszeichen E in Fig. 22 und Fig. 11) gerät bei weiterem Schwenken in Richtung u2 die Rolle 28 mit einem Punkt P4 der Steuerkurve in Kontakt, an welchem der Abstand von der Schwenkachse a wieder zunimmt. D.h. die Kolbenstange, die sich gemäß Fig. 11 in der primären Position befindet, bewegt sich wieder in Richtung der sekundären Position, wobei die weitere Bewegung der Armlehne in dem Winkelbereich γ gedämpft wird.

In der Nichtgebrauchsposition gemäß Fig. 8 befindet sich die Rolle 28 in Kontakt mit dem Punkt P5 der Steuerfläche 30. Die Kolbenstange 27 ist in der sekundären Position angeordnet.

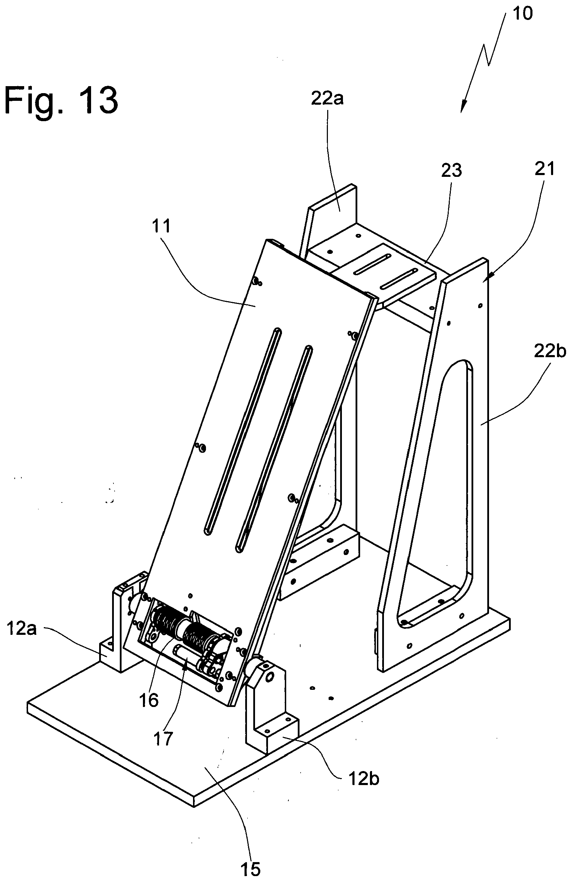

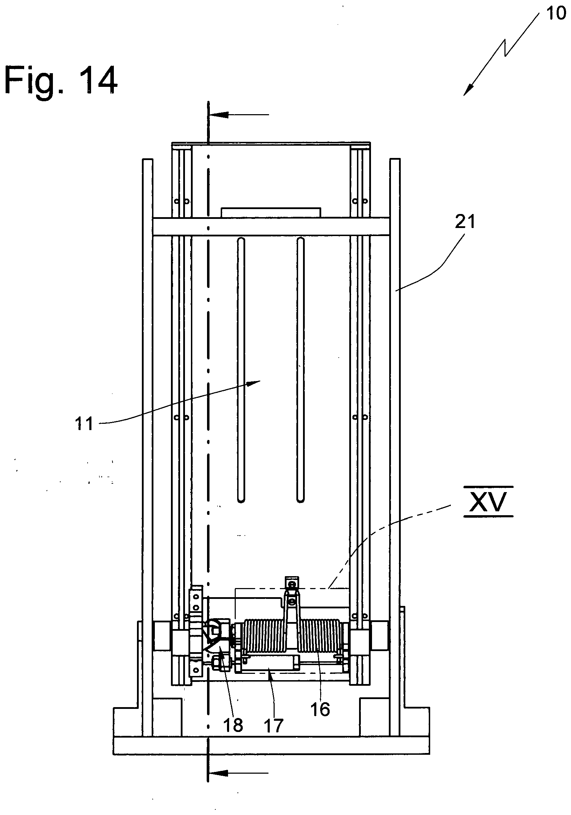

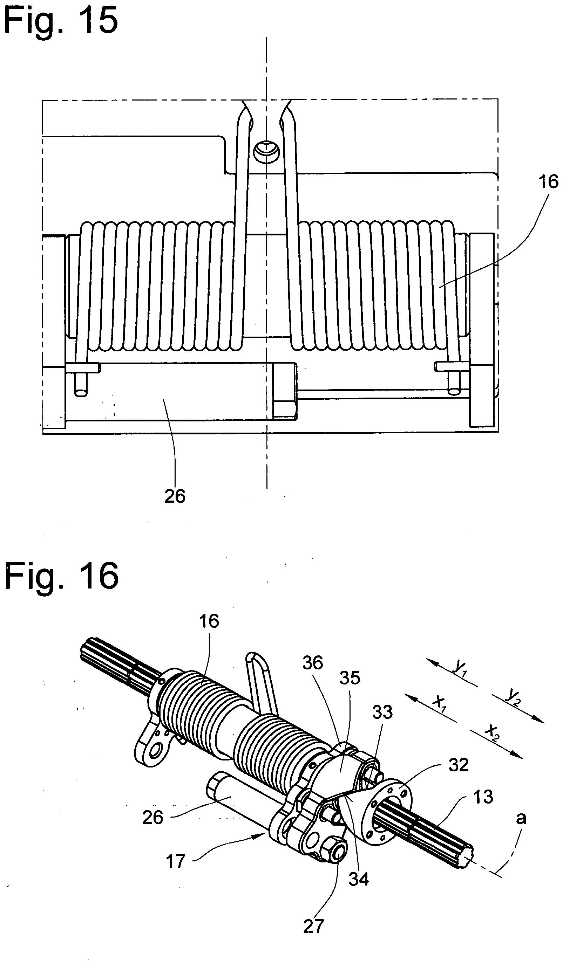

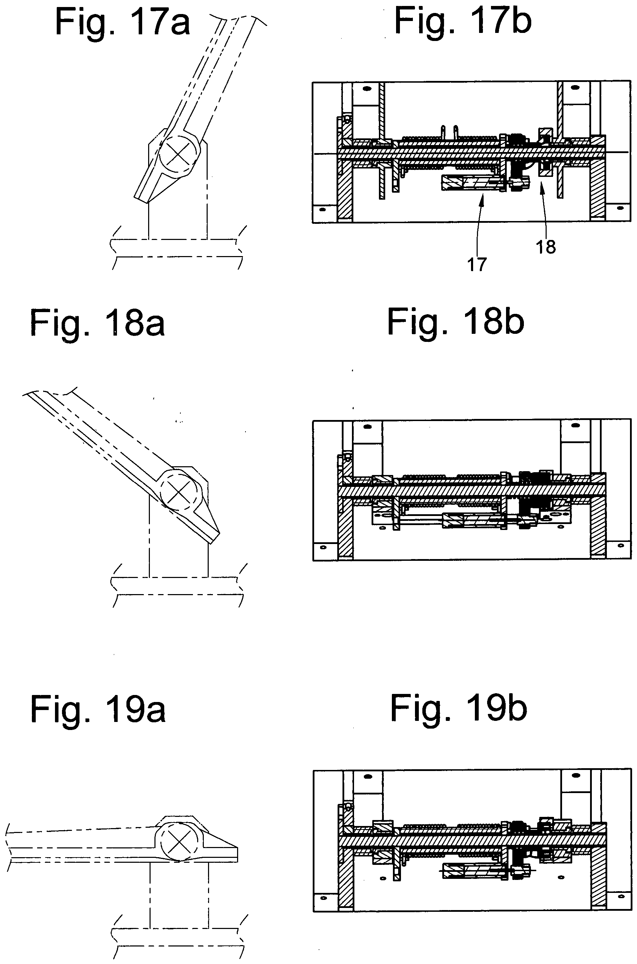

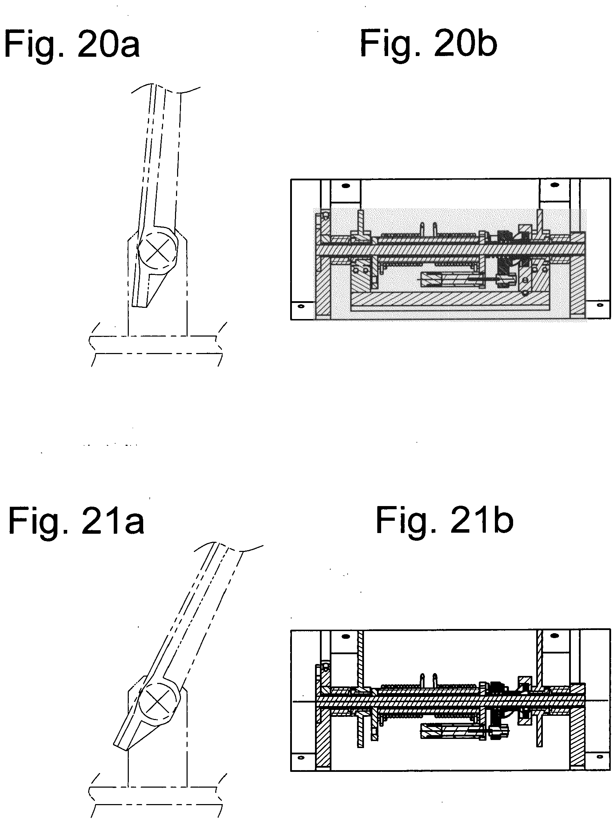

In den Fig. 13 bis 21b ist ein zweites Ausführungsbeispiel der Armlehne 10 dargestellt, welches grundsätzlich dem ersten Ausführungsbeispiel entspricht, wobei im Unterschied zu dem ersten Ausführungsbeispiel die Steuerfläche dem Armlehnenkörper 11 zugeordnet ist und die Zylinder 26 fest mit der Achse 13 verbunden sind. In Fig. 16 ist ein Steuernocken 32 erkennbar, welcher fest mit dem Armlehnenkörper 11 verbunden ist. Der Steuernocken 32 weist eine Steuerfläche 33 auf, die mit einer Betätigungsfläche 34 eines Betätigungsteils 35 zusammenwirkt. Das Betätigungsteil 35 kann sich in die Richtungen y1 und y2 bewegen. Die Bewegungsrichtungen y1 und y2 sind parallel zu der Schwenkachse a und zu den Bewegungsrichtungen x1 und x2 der Kolbenstange 27 gerichtet. Der Zylinder 26 der Dämpfungsvorrichtung 17 ist an einem Lagerteil 36 gelagert, welches fest auf der Achse 13 montiert ist. Die Kolbenstange 27 ist an dem Betätigungsteil befestigt. Je weiter die Steuerfläche 33 in Richtung x1 ragt, umso weiter wird das Betätigungsteil 35 und damit die Kolbenstange 27 aus der primären Position in Richtung x1 in Richtung der sekundären Position bewegt.

## Patentansprüche

1. Armlehne für einen Fahrzeugsitz mit einem Armlehnenkörper (11), welcher mit einer Basis (15) ein Schwenkgelenk bildet und über einen Schwenkwinkel (α) hinweg zwischen einer Nichtgebrauchsposition und einer Gebrauchsposition schwenkbar ist, wobei wenigstens eine Dämpfungsvorrichtung (17a, 17b) zur Dämpfung der Bewegung des Armlehnenkörpers (11) vorgesehen ist, **dadurch gekennzeichnet, dass** die Armlehne (10) eine Steuervorrichtung (18a, 18b) aufweist, welche die Dämpfungsvorrichtung (17a, 17b) in wenigstens einem ersten Teilbereich (β, γ) des Schwenkwinkels betätigt und dass die Steuervorrichtung (18a, 18b) einen Steuernocken (29, 32) mit einer Steuerfläche (30, 33) umfasst, wobei die Steuerfläche (30, 33) mit der Dämpfungsvorrichtung (17a, 17b) in Kontakt steht und sich relativ zu der Dämpfungsvorrichtung bewegt.

2. Armlehne nach Anspruch 1, **dadurch gekennzeichnet, dass** bei der Bewegung des Armlehnenkörpers (11) von der Nichtgebrauchs- in die Gebrauchsposition die Dämpfung der Dämpfungsvorrichtung (17a, 17b) in einem ersten Winkelbereich (β) vor der Gebrauchsposition erfolgt, insbesondere in einem Winkelbereich von 30 bis 40° vor der Gebrauchsposition.

3. Armlehne nach Anspruch 1 oder 2, **dadurch gekennzeichnet, dass** bei der Bewegung des Armlehnenkörpers (11) von der Gebrauchs- in die die Nichtgebrauchsposition die Dämpfung der Dämpfungsvorrichtung (17a, 17b) in einem zweiten Winkelbereich (γ) vor der Nichtgebrauchsposition erfolgt, insbesondere in einem Winkelbereich von etwa 30° bis 40 Grad vor der Nichtgebrauchsposition.

4. Armlehne nach einem der vorangehenden Ansprüche, **dadurch gekennzeichnet, dass** bei der Bewegung des Armlehnenkörpers (11) von der Nichtgebrauchs- in die Gebrauchsposition eine Rückstellvorrichtung, insbesondere eine Feder (16), gespannt wird, welche sich bei der Bewegung von der Gebrauchs- in die Nichtgebrauchsposition entspannt.

5. Armlehne nach einem der vorangehenden Ansprüche, **dadurch gekennzeichnet, dass** die Dämpfungsvorrichtung (17a, 17b) dem Armlehnenkörper (11) oder dem Basisteil (15) und der Steuernocken (29, 32) dem jeweils anderen Teil von Basisteil (15) oder Armlehnenkörper (11) zugeordnet ist.

6. Armlehne nach einem der vorangehenden Ansprüche, **dadurch gekennzeichnet, dass** die Dämpfungsvorrichtung (17a, 17b) einen Zylinder (26) und eine Kolbenstange (27) umfasst, wobei die Kolbenstange (27) zwischen einer primären Position und einer sekundären Position in eine erste Bewegungssrichtung (x1) und in eine zweite Bewegungsrichtung (x2) bewegbar ist.

7. Armlehne nach Anspruch 6, **dadurch gekennzeichnet, dass** die Bewegung des Armlehnenkörpers bei der Bewegung der Kolbenstange (27) in die erste Bewegungsrichtung (x1) gedämpft wird und bei der Bewegung in die zweite Bewegungsrichtung (x2) nicht gedämpft wird.

8. Armlehne nach Anspruch 6 oder 7, **dadurch gekennzeichnet, dass** die Steuerfläche (30, 33) mit einer Rolle (28) in Kontakt steht, welche von der Kolbenstange (27) beaufschlagt wird.

## Claims

1. Armrest for a vehicle seat, comprising an armrest body (11) which forms a pivot joint with a base (15) and can be pivoted through a pivot angle (α) between a non-use position and a use position, wherein at least one damping device (17a, 17b) is provided for damping the movement of the armrest body (11), **characterised in that** the armrest (10) has a control device (18a, 18b) which actuates the damping device (17a, 17b) in at least one first sub-range (β, γ) of the pivot angle, and **in that** the control device (18a, 18b) comprises a control cam (29, 32) having a control surface (30, 33), wherein the control surface (30, 33) is in contact with the damping device (17a, 17b) and moves relative to the damping device.

2. Armrest according to claim 1, **characterised in that**, when the armrest body (11) moves from the non-use position to the use position, the damping by the damping device (17a, 17b) takes place in a first angle range (β) before the use position, in particular in an angle range of 30 to 40° before the use position.

3. Armrest according to claim 1 or 2, **characterised in that**, when the armrest body (11) moves from the use position to the non-use position, the damping by the damping device (17a, 17b) takes place in a second angle range (γ) before the non-use position, in particular in an angle range of around 30° to 40 degrees before the non-use position.

4. Armrest according to one of the preceding claims, **characterised in that** a return device, in particular a spring (16), is tensioned when the armrest body (11) moves from the non-use position to the use position and is released when said armrest body moves from the use position to the non-use position.

5. Armrest according to one of the preceding claims, **characterised in that** the damping device (17a, 17b) is assigned to the armrest body (11) or the base part (15), and the control cam (29, 32) is assigned to the respective other part consisting of base part (15) or armrest body (11).

6. Armrest according to one of the preceding claims, **characterised in that** the damping device (17a, 17b) comprises a cylinder (26) and a piston rod (27), wherein the piston rod (27) is movable in a first movement direction (x1) and in a second movement direction (x2) between a primary position and a secondary position.

7. Armrest according to claim 6, **characterised in that** the movement of the armrest body is damped when the piston rod (27) moves in the first movement direction (x1) and is not damped when said piston rod moves in the second movement direction (x2).

8. Armrest according to claim 6 or 7, **characterised in that** the control surface (30, 33) is in contact with a roller (28) that is acted upon by the piston rod (27).

## Revendications

1. Accoudoir pour un siège de véhicule, comprenant un corps d'accoudoir (11) qui, avec une base (15), forme une articulation à pivot et peut pivoter d'un angle de pivotement (α) entre une position de non utilisation et une position d'utilisation et, dans lequel au moins un dispositif d'amortissement (17a, 17b) est prévu pour amortir le mouvement du corps d'accoudoir (11), **caractérisé en ce que** l'accoudoir (10) présente un dispositif de commande (18a, 18b) qui actionne le dispositif d'amortissement (17a, 17b) dans au moins une première partie (β, y) de l'angle de pivotement, et **en ce que** le dispositif de commande (18a, 18b) comporte une came de commande (29, 32) avec une face de commande (30, 33), la face de commande (30, 33) étant en contact avec le dispositif d'amortissement (17a, 17b) et se déplaçant par rapport au dispositif d'amortissement.

2. Accoudoir selon la revendication 1, **caractérisé en ce que**, lors du mouvement du corps de l'accoudoir (11) de la position de non utilisation à la position d'utilisation, l'amortissement du dispositif d'amortissement (17a, 17b), s'effectue dans une première zone d'angle (β) avant la position d'utilisation, en particulier dans une zone d'angle de 30 à 40° avant la position d'utilisation.

3. Accoudoir selon la revendication 1 ou 2, **caractérisé en ce que**, lors du mouvement du corps de l'accoudoir (11) de la position d'utilisation à la position de non utilisation, l'amortissement du dispositif d'amortissement (17a, 17b), s'effectue dans une deuxième zone d'angle (y) avant la position de non utilisation, en particulier dans une zone d'angle d'environ 30 à 40° avant la position de non utilisation.

4. Accoudoir selon l'une des précédentes revendications, **caractérisé en ce que**, lors du mouvement du corps de l'accoudoir (11) de la position de non utilisation à la position d'utilisation, un dispositif de rappel, en particulier un ressort (16), est tendu, qui se détend lors du mouvement de la position d'utilisation à la position de non utilisation.

5. Accoudoir selon l'une des précédentes revendications, **caractérisé en ce que** le dispositif d'amortissement (17a, 17b) est associé au corps de l'accoudoir (11) ou à la partie de base (15) et aux cames de commande (29, 32) à l'autre partie respective de la partie de base (15) ou du corps d'accoudoir (11).

6. Accoudoir selon l'une des précédentes revendications, **caractérisé en ce que** le dispositif d'amortissement (17a, 17b) comporte un cylindre (26) et une tige de piston (27), la tige de piston (27) étant mobile entre une position primaire et une position secondaire dans un premier sens de déplacement (x1) et dans un deuxième sens de déplacement (x2).

7. Accoudoir selon la revendication 6, **caractérisé en ce que** le mouvement du corps d'accoudoir est amorti lors du déplacement de la tige de piston (27) dans le premier sens de déplacement (x1), et non amorti lors du déplacement dans le deuxième sens de déplacement (x2).

8. Accoudoir selon la revendication 6 ou 7, **caractérisé en ce que** la face de commande (30, 33) est en contact avec un rouleau (28) qui est contraint par la tige de piston (27).
